# EUROPEAN PATENT SPECIFICATION

(11) **EP 2 692 074 B1**
(45) Date of publication and mention of the grant of the patent: **23.10.2019**
(21) Application number: 12763684.3
(22) Date of filing: 29.03.2012
(51) Int. Cl.: H04W 4/06, H04W 36/00, H04B 7/26, H04W 36/08

(54) **METHOD OF PROVIDING SERVICE TO USER EQUIPMENT IN WIRELESS COMMUNICATION SYSTEM AND APPARATUS THEREOF**
VERFAHREN ZUR BEREITSTELLUNG VON DIENSTEN FÜR BENUTZERAUSRÜSTUNG IN DRAHTLOSEN KOMMUNIKATIONSSYSTEMEN UND VORRICHTUNG DAVON
PROCÉDÉ D'OBTENTION DE SERVICE POUR UN ÉQUIPEMENT D'UTILISATEUR DANS UN SYSTÈME DE COMMUNICATION SANS FIL ET APPAREIL ASSOCIÉ

(30) Priority: 31.03.2011 US 201161470459 P; 04.04.2011 US 201161471667 P
(43) Date of publication of application: 05.02.2014
(73) Proprietor: LG Electronics Inc., Yeongdeungpo-gu Seoul 150-721 (KR)
(72) Inventor: LEE, Youngdae, Anyang-si Gyeonggi-do 431-080 (KR); JUNG, Sunghoon, Anyang-si Gyeonggi-do 431-080 (KR); YI, Seungjune, Anyang-si Gyeonggi-do 431-080 (KR); CHUN, Sungduck, Anyang-si Gyeonggi-do 431-080 (KR); PARK, Sungjun, Anyang-si Gyeonggi-do 431-080 (KR)
(74) Representative: Maikowski & Ninnemann Patentanwälte Partnerschaft mbB
(86) International application number: PCT/KR2012/002298
(87) International publication number: WO 2012/134182

(56) References cited:
- EP-A2- 1 509 056
- WO-A2-2005/101886
- WO-A2-2008/112255
- KR-A- 20110 009 112
- US-A1- 2005 090 278
- US-B1- 6 937 610
- NTT DOCOMO ET AL: "IDLE mode mobility control principles", 3GPP DRAFT; R2-074001 IDLE MODE MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071002, 2 October 2007 (2007-10-02), pages 1-8, XP050136641, [retrieved on 2007-10-02]

## Description

### Technical Field

The present invention relates to a wireless communication system, and more particularly, to a method of providing service to a user equipment in a wireless communication system and apparatus therefor.

### Background Art

First of all, in the following description, 3GPP LTE (3rd generation partnership projecting long term evolution) communication system is schematically explained as an example of a wireless communication system to which the present invention is applicable.

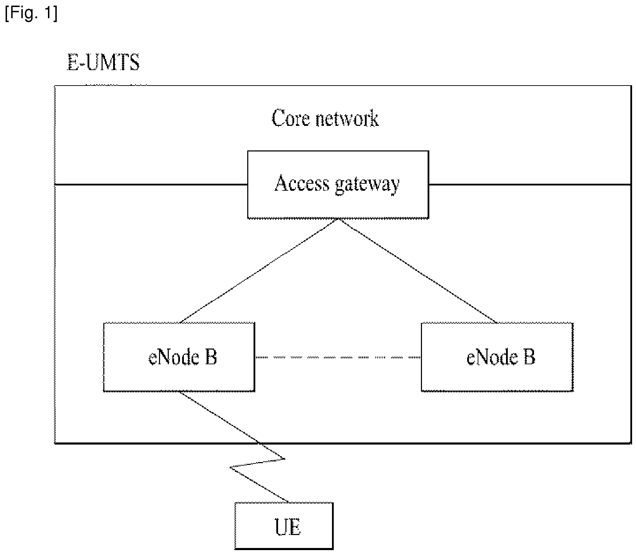

FIG. 1 is a schematic diagram of E-UMTS network structure as an example of a wireless communication system. E-UMTS (evolved universal mobile telecommunications system) is the system evolved from a conventional UMTS (universal mobile telecommunications system) and its basic standardization is progressing by 3GPP. Generally, E-UMTS can be called LTE (long term evolution) system. For the details of the technical specifications of UMTS and E-UMTS, Release 7 and Release 8 of'3rd Generation Partnership Project: Technical Specification Group Radio Access Network' can be referred to.

Referring to FIG. 1, E-UMTS consists of a user equipment (UE), base stations (eNode B: eNB) and an access gateway (AG) provided to an end terminal of a network (E-UTRAN) to be connected to an external network. The base station is able to simultaneously transmit multi-data stream for a broadcast service, a multicast service and/or a unicast service.

At least one or more cells exist in one base station. The cell is set to one of bandwidths including 1.25 MHz, 2.5 MHz, 5 MHz, 10 MHz, 15 MHz, 20 MHz and the like and then provides an uplink or downlink transmission service to a plurality of user equipments. Different cells can be set to provide different bandwidths, respectively. A base station controls data transmissions and receptions for a plurality of user equipments. A base station sends downlink scheduling information on downlink (DL) data to inform a corresponding user equipment of time/frequency region for transmitting data to the corresponding user equipment, coding, data size, HARQ (hybrid automatic repeat and request) relevant information and the like. And, the base station sends uplink scheduling information on uplink (UL) data to a corresponding user equipment to inform the corresponding user equipment of time/frequency region available for the corresponding user equipment, coding, data size, HARQ relevant information and the like. An interface for a user traffic transmission or a control traffic transmission is usable between base stations. A core network (CN) can consist of an AG, a network node for user registration of a user equipment and the like. The AG manages mobility of the user equipment by a unit of TA (tracking area) including a plurality of cells.

The wireless communication technology has been developed up to LTE based on WCDMA but the demands and expectations of users and service providers are continuously rising. Since other radio access technologies keep being developed, new technological evolution is requested to become competitive in the future. For this, reduction of cost per bit, service availability increase, flexible frequency band use, simple-structure and open interface, reasonable power consumption of user equipment and the like are required.

WO 2005/101886 A2 describes a frequency layer convergence method for MBMS (Multimedia Broadcast Multicast Service).

EP 1 509 056 A2 describes a cell reselection method for receiving packet data in a mobile communication system supporting MBMS.

WO 2008/112255 A2 describes a cell reselection process for wireless communications.

The document NTT DOCOMO: "IDLE mode mobility control principles", 3GPP DRAFT; R2-074001 IDLE MODE MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, (20071002), vol. RAN WG2, no. Shanghai, China; 20071002, pages 1 - 8, XP050136641 describes mechanisms related to priority control. For example, in certain situations, it is proposed that UE specific priorities should override the priorities indicated by BCCH (Broadcast Control Channel). E.g., based on an advertised MBMS information and the MBMS service that the UE is willing to receive, the UE decides the priority of layers and the MBMS priority overrides any priority settings that the network has signaled.

### Disclosure of Invention

### Technical Problem

Based on the above-mentioned discussion, a method of providing service to a user equipment in a wireless communication system and apparatus therefore shall be proposed in the following description.

### Solution to Problem

To achieve these and other advantages and in accordance with the purpose of the present invention, as embodied and broadly described, the subject-matter of the independent claims is presented. Features of some embodiments are defined in the dependent claims. For example, a method for prioritizing frequencies by a user equipment (UE) in a wireless communication system comprises identifying a plurality of frequencies, each frequency having a corresponding priority; and considering a specific frequency to be the highest priority among the plurality of frequencies, wherein the specific frequency is for a MBMS (Multimedia Broadcast Multicast Service) service.

Preferably, the steps are related to reselection priorities handling. More preferably, the reselection priorities handling is for a cell reselection procedure. Especially, the reselection priorities handling is performed by the UE in an RRC (radio resource control) idle mode.

Further, the method comprises receiving priority information on at least one of the plurality of frequencies from a network. Here, the priority information is received via system information or dedicated signalling. The dedicated signalling comprises a RRC (Radio Resource Control) connection release message.

Further, the method comprises receiving information on the specific frequency from a network or/and receiving the MBMS service through the specific frequency from a network.

Preferably, the method further comprises changing a priority of the specific frequency, if stopping receiving the MBMS service or if being not in an area in which the MBMS service is provided.

In another aspect of the present invention, a user equipment (UE) in a wireless communication system comprises a processor configured cause the UE to identify a plurality of frequencies, each frequency having a corresponding priority, and consider a specific frequency to be the highest priority among the plurality of frequencies, wherein the specific frequency is for a MBMS (Multimedia Broadcast Multicast Service) service.

Preferably, the identification of the plurality of frequencies and the consideration of the specific frequency to be the highest priority are related to reselection priorities handling. More preferably, the reselection priorities handling is for a cell reselection procedure. Especially, the reselection priorities handling is performed by the UE in an RRC (radio resource control) idle mode.

Further, the processor further configured to cause the UE to receive priority information on at least one of the plurality of frequencies from a network. Here, the priority information is received via system information or dedicated signalling. The dedicated signalling comprises a RRC (Radio Resource Control) connection release message

Further, the processor further configured to cause the UE to receive information on the specific frequency from a network, and/or further configured to cause the UE to receive the MBMS service through the specific frequency from a network.

Preferably, the processor further configured to cause the UE to change a priority of the specific frequency, if stopping receiving the MBMS service or if being not in an area in which the MBMS service is provided.

### Advantageous Effects of Invention

According to an embodiment of the present invention, a base station is able to provide an effective MBMS to a user equipment.

Additional features and advantages of the invention will be set forth in the description which follows, and in part will be apparent from the description, or may be learned by practice of the invention. The objectives and other advantages of the invention will be realized and attained by the structure particularly pointed out in the written description and claims thereof as well as the appended drawings.

### Brief Description of Drawings

FIG. 1 is a schematic diagram of E-UMTS network structure as an example of a mobile communication system.
FIG. 2 is a conceptional diagram of a network structure of E-UTRAN (evolved universal terrestrial radio access network).
FIG. 3 is a diagram of stmctures of control and user planes of a radio interface protocol between a user equipment and E-UTRAN based on 3GPP radio access network specification.
FIG. 4 is a diagram for explaining physical channels used for 3GPP system and a general method of transmitting a signal using the same.
FIG. 5 is a diagram for an example of a structure of a radio frame used for LTE system.
FIG. 6 is a diagram for explaining a general transceiving method using a paging message.
FIG. 7 is a diagram for a transmission scheme of MCCH (MBMS control channel).
FIG. 8 is a flowchart showing a cell reselection procedure according a first embodiment of the present invention.
FIG. 9 is a flowchart showing another cell reselection procedure according the first embodiment of the present invention.
FIG. 10 is a flowchart showing a cell reselection procedure according a second embodiment of the present invention.
FIG. 11 is a flowchart showing another cell reselection procedure according the second embodiment of the present invention.
FIG. 12 is an exemplary block diagram of a communication apparatus according to one embodiment of the present invention.

### Mode for the Invention

Reference will now be made in detail to the preferred embodiments of the present invention, examples of which are illustrated in the accompanying drawings. The embodiments described in the following description include the examples showing that the technical features of the present invention are applied to 3GPP system.

Although an embodiment of the present invention is exemplarily described in the present specification using the LTE system and the LTE-A system, the embodiment of the present invention is also applicable to any kinds of communication systems corresponding to the above definitions. Although an embodiment of the present invention is exemplarily described with reference to FDD scheme in the present specification, the embodiment of the present invention is easily modifiable and applicable to H-FDD or TDD scheme.

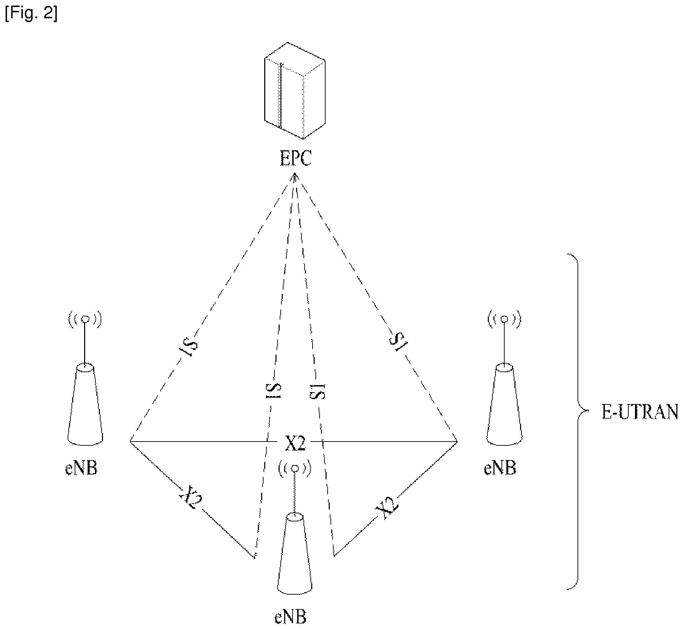

FIG. 2 is a conceptional diagram of a network structure of E-UTRAN (evolved universal terrestrial radio access network). In particular, the E-UTRAN system is the system evolved from a conventional UTRAN system. The E-UTRAN includes cells (e.g., eNBs). And, the cells are connected via an X2 interface with each other Each of the cell is connected to a user equipment via a radio interface and is also connected to an evolved packet core (EPC) via an S 1 interface.

The EPC includes MME (Mobility Management Entity), S-GW (Serving-Gateway) and PDN-GW (Packet Data Network-Gateway). The MME has an information of a user equipment or an information on capability of the user equipment. Such information is mainly used for management of mobility of the user equipment. The SGW is a gateway having the E-UTRAN as a terminal end point. And, the PDN-GW is a gateway having a packet data network (PDN) as a terminal end point.

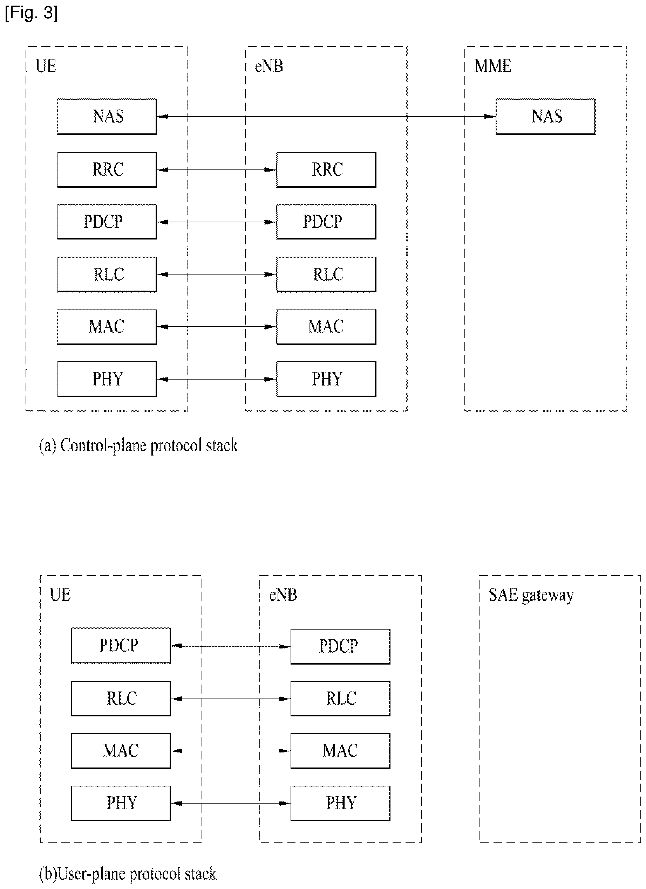

FIG. 3 is a diagram of stmctures of control and user planes of a radio interface protocol between a user equipment and E-UTRAN based on 3GPP radio access network specification. First of all, a control plane means a passage for transmitting control messages used by a user equipment and a network to mange a call. A user plane means a passage for transmitting such data generated from an application layer as voice data, internet packet data and the like.

A physical layer, i.e., a first layer, provides an information transfer service to an upper layer using a physical channel. The physical layer is connected to a medium access control layer located above via a transport channel. Data are transferred between the medium access control layer and the physical layer via the transport channel. Data are transferred between a physical layer of a transmitting side and a physical layer of a receiving side via a physical channel. The physical channel uses time and frequency as radio resources. In particular, a physical layer is modulated in downlink by OFDMA (orthogonal frequency division multiple access) scheme and is modulated in uplink by SC-FDMA (single carrier frequency division multiple access) scheme.

A medium access control (hereinafter abbreviated MAC) layer of a second layer provides a service to a radio link control (hereinafter abbreviated RLC) layer of an upper layer via a logical channel. The RLC layer o the second layer supports reliable data transfer. A function of the RLC layer can be implemented using a function block within the MAC. A packet data convergence protocol (hereinafter abbreviated PDCP) layer of the second layer performs a header compression function for reducing unnecessary control information to transmit such an IP packet as IPv4 and IPv6 in a radio interface having a narrow bandwidth.

A radio resource control (hereinafter abbreviated RRC) layer located on a lowest level of a third layer is defined in a control plane only. The RRC layer is responsible for controlling logical channel, transport channel and physical channels in association with configuration, reconfiguration and release of radio bearers (RBs). In this case, the RB means a service provided by the second layer for a data transfer between a user equipment and a network. For this, the RRC layer of the user equipment exchanges RRC messages with the RRC layer of the network.

One cell, which constructs a base station (eNB), is set to one of bandwidths including

1.25 MHz, 2.5 MHz, 5 MHz, 10 MHz, 15 MHz, 20 MHz and the like and then provides an uplink or downlink transmission service to a plurality of user equipments. Different cells can be set to provide different bandwidths, respectively.

A downlink transport channel for transporting data to a user equipment from a network includes a broadcast channel (BCH) for transporting system information, a paging channel (PCH) for transmitting a paging message, a downlink shared channel (SCH) for transmitting a user traffic or a control message or the like. A traffic or control message of a downlink multicast or broadcast service can be transmitted via a downlink SCH or a separate downlink multicast channel (MCH).

Meanwhile, an uplink transport channel for transmitting data from a user equipment to a network includes a random access channel for transmitting an initial control message, an uplink shared channel (SCH) for transmitting a user traffic or a control message or the like. A logical channel located above a transport channel to be mapped by a transport channel includes BCCH (Broadcast Control Channel), PCCH (Paging Control Channel), CCCH (Common Control Channel), MCCH (Multicast Control Channel), MTCH (Multicast Traffic Channel) or the like.

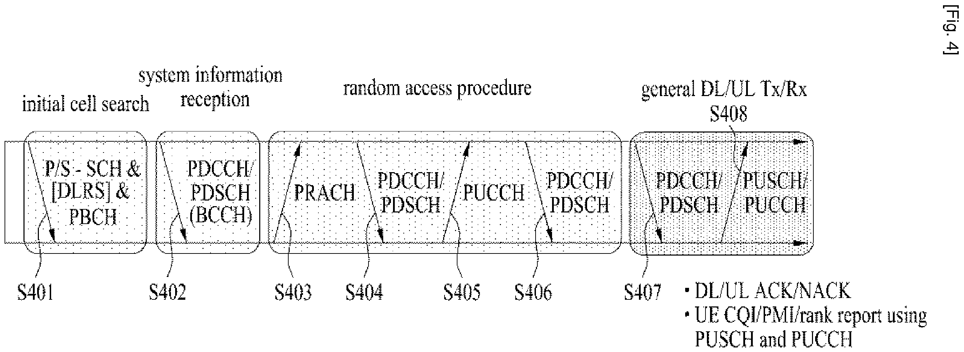

FIG. 4 is a diagram for explaining physical channels used for 3GPP system and a general method of transmitting a signal using the same.

If a power of a user equipment is turned on or the user equipment enters a new cell, the user equipment performs an initial cell search for matching synchronization with a base station and the like [S401]. For this, the user equipment receives a primary synchronization channel (P-SCH) and a secondary synchronization channel (S-SCH) from the base station, matches synchronization with the base station and then obtains information such as a cell ID and the like. Subsequently, the user equipment receives a physical broadcast channel from the base station and is then able to obtain intra-cell broadcast information. Meanwhile, the user equipment receives a downlink reference signal (DL RS) in the initial cell searching step and is then able to check a downlink channel status.

Having completed the initial cell search, the user equipment receives a physical downlink control channel (PDCCH) and a physical downlink shared control channel (PDSCH) according to information carried on the physical downlink control channel (PDCCH) and is then able to obtain system information in further detail [S402].

Meanwhile, if the user equipment initially accesses the base station or fails to have a radio resource for signal transmission, the user equipment is able to perform a random access procedure (RACH) on the base station [S403 to S406]. For this, the user equipment transmits a specific sequence as a preamble via a physical random access channel (PRACH) [S403] and is then able to receive a response message via PDCCH and a corresponding PDSCH in response to the preamble [S404]. In case of contention based RACH, it is able to perform a contention resolution procedure in addition.

Having performed the above mentioned procedures, the user equipment is able to perform PDCCH/PDSCH reception [S407] and PUSCH/PUCCH (physical uplink shared channel/physical uplink control channel) transmission [S408] as a general uplink/downlink signal transmission procedure. In particular, the user equipment receives a downlink control information (DCI) via PDCCH. In this case, the DCI includes such control information as resource allocation information on a user equipment and can differ in format in accordance with the purpose of its use.

Meanwhile, control information transmitted/received in uplink/downlink to/from the base station by the user equipment includes ACK/NACK signal, CQI (channel quality indicator), PMI (precoding matrix index), RI (rank indicator) and the like. In case of the 3GPP LTE system, the user equipment is able to transmit the above mentioned control information such as CQI, PMI, RI and the like via PUSCH and/or PUCCH.

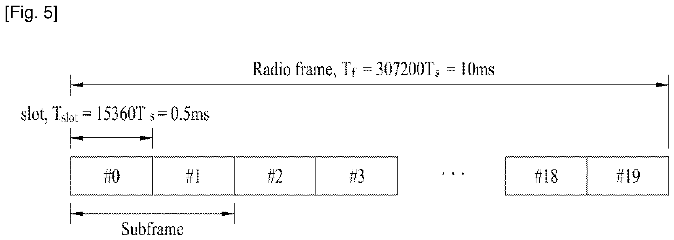

FIG. 5 is a diagram for an example of a structure of a radio frame used for LTE system.

Referring to FIG. 5, a radio frame has a length of 10ms (327200 x Ts) and is constmcted with 10 subframes in equal size. Each of the subframes has a length of 1ms and is constructed with two slots. Each of the slots has a length of 0.5ms (15360 x Ts). In this case, Ts indicates a sampling time and is expressed as Ts = 1/(15kHzx2048) = 3.2552 x IO <8> (about 33 ns). The slot includes a plurality of OFDM symbols in a time domain and includes a plurality of resource blocks (RB) in a frequency domain. In the LTE system, one resource block includes '12 subcarriers x 7 or 6 OFDM symbols'. A transmission time interval (TTI), which is a unit time for transmitting data, can be determined by at least one subframe unit. The above described stmcture of the radio frame is just exemplary. And, the number of subframes included in a radio frame, the number of slots included in a subframe and/or the number of OFDM symbols included in a slot can be modified in various ways.

In the following description, an RRC state of a user equipment and a corresponding
RRC connecting method are explained. In this case, the RRC state means whether an RRC of a user equipment is logically connected to an RRC of E-UTRAN (i.e., logical connection). If the RRCs are connected to each other, it is called an RRC connected state (RRCCONNECTED). If the RRCs are not connected to each other, it can be called an RRC idle state (RRCJDLE).

Since E-UTRAN is able to obtain an existence of a user equipment in an RRC connected state by a cell unit, it is able to effectively control the user equipment. On the contrary, the E-UTRAN is unable to obtain a user equipment in an idle state by a cell unit and the corresponding user equipment is managed by a CN by a TA unit that is an area unit greater than a cell. In particular, in order to receive such a service as voice and data from a cell, a user equipment in an RRC idle state should make a transition to an RRC connected state.

Specifically, when a user initially turns on a power of a user equipment, the user equipment searches for an appropriate cell and then stays in an RRC idle state at the corresponding cell. If the user equipment staying in the RRC idle state needs to establish an RRC connection, it makes a transition to an RRC connected state by performing an RRC connection establishment process. In particular, if the RRC connection needs to be established, it means the case that an uplink data transmission is necessary due to user's call attempt or the like or the case that a response message needs to be sent in case of receiving a paging message from the E-UTRAN.

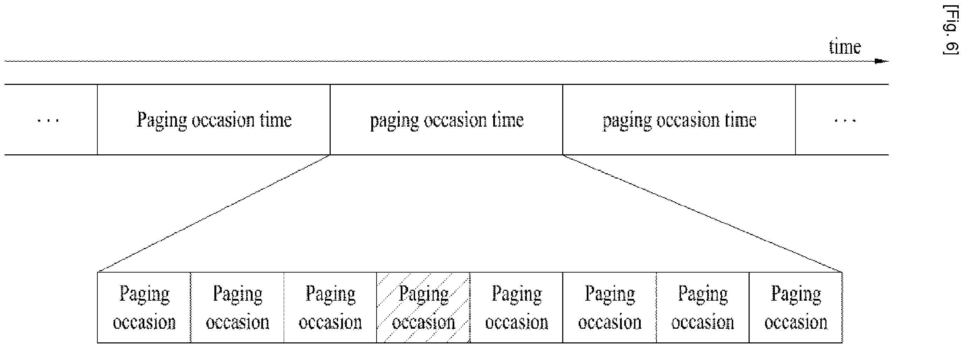

FIG. 6 is a diagram for explaining a general transceiving method using a paging message.

Referring to FIG. 6, a paging message contains a paging cause and a paging record including a UE identity and the like. When the paging message is received, a user equipment is able to perform a discontinuous reception (DRX) for the purpose of power consumption reduction.

In particular, a network configures several paging occasions (POs) for each time cycle called a paging DRX cycle to enable a specific user equipment to obtain a paging message by receiving a specific paging occasion only. The user equipment does not receive a paging channel in a time except the specific paging occasion and is able to stay in a sleep mode to reduce power consumption. And, one paging occasion corresponds to one TTI.

A base station and a user equipment use a paging indicator (PI) as a specific value indicating a transmission of a paging message. The base station defines a specific identity (e.g., paging-radio network temporary identity: P-RNTI) for a usage of the PI and is then able to inform the user equipment of the paging information transmission. For instance, a user equipment wakes up each DRX cycle and then receives one subframe to recognize a presence or non-presence of a paging message. If P-RNTI is contained in L1/L2 control channel (PDCCH) of the received subframe, the user equipment is able to recognize that the paging message exists in PDSCH of the corresponding subframe. If a UE identity (e.g., IMSI) of the user equipment is contained in the paging message, the user equipment makes a response (e.g., RRC connection, system information reception, etc.) to the base station and is then able to receive a service.

In the following description, system information is explained. First of all, the system information should contain necessary information a user equipment should be aware of to access a base station. Therefore, the user equipment should receive all system information before accessing the base station and should have latest system information all the time. Since all user equipments in a cell should be aware of the system information, the base station periodically transmits the system information.

System information can be divided into MIB (Master Information Block), SB (Scheduling Block) and SIB (System Information Block). The MIB enables a user equipment to recognize such a physical configuration of a corresponding cell as a bandwidth and the like. The SB indicates such transmission information of SIBs as a transmission cycle and the like. In this case, the SIB is an aggregate of system informations related to each other. For instance, a specific SIB contains information of a neighbor cell only and another SIB just contains information of a UL radio channel used by a user equipment.

Now, cell selection and cell reselection will be described below.

When a UE is powered on, the UE should prepare for receiving a service by selecting a cell having an appropriate quality. In RRC idle state, the UE should select a cell having an appropriate quality and prepare for receiving a service from the cell. For example, shortly after being powered on, the UE should select a cell having an appropriate quality to register to the network. If the UE transitions from RRC connected state to the RRC idle state, the UE should select a cell in which it will stay in the RRC idle state. In this manner, the process in which a UE selects a cell satisfying a specific condition to stay in a service idle state such as the RRC idle state is called cell selection. Because cell selection is performed when a UE has not decided yet on a cell in which it will stay in the RRC idle state, it is very important to select a cell as quickly as possible. Therefore, as far as a cell offers a radio signal quality at a specific level or higher, the UE may select the cell even though the cell is not the best cell.

Once the UE selects a cell satisfying a cell selection criterion, the UE acquires information needed for operating in the RRC idle state in the cell from system information of the cell. After receiving all information required to operate in the RRC idle state, the UE requests a service to the network or waits in the RRC idle state to receive a service from the network.

After the UE selects a cell during the cell selection procedure, the strength or quality of a cell may change between the UE and an eNB due to a change in the mobility of the UE or a radio environment. If the quality of the selected cell is degraded, the UE may select another cell offering a better quality. In this case, the UE typically selects a cell that provides a better signal quality than the current cell. This process is called cell reselection. The basic purpose of cell reselection is to select a cell offering the best quality to a UE. Aside from the aspect of radio signal quality, the network may prioritize frequencies and notify the UE of the priority levels of the frequencies. Then the UE puts the priority levels of the frequencies before radio signal qualities during cell reselection.

In the following description, MBMS (multimedia broadcast multicast service) is explained. First of all, MBMS (multimedia broadcast multicast service) is a kind of a broadcast/multicast service and is the service for transmitting multimedia data packets to a plurality of user equipments simultaneously. 'Broadcast/multicast service' or / MBMS' used in the present disclosure can be substituted with such a terminology as 'point-to-multipoint service', 'MBS (multicast and broadcast service)' and the like. In the MBMS based on IP multicast, user equipments share a resource required for data packet transmission with each other and then receive the same multimedia data. Hence, in case that user equipments on a predetermined level using MBMS exist in the same cell, it is able to raise resource efficiency. Since the MBMS has no relation with an RRC connected state, a user equipment in an idle state is able to receive the corresponding service.

A logical channel MCCH (MBMS control channel) or MTCH (MBMS traffic channel) for MBMS can be mapped to a transport channel MCH (MBMS channel). The MCCH carries an RRC message containing MBMS related common control information, while the MTCH carries a traffic of a specific MBMS service. A single MCCH exists in a single MBSFN (MBMS single frequency network) area to carry the same MBMS information or traffic. In case that a plurality of MBSFN areas are provided by a single cell, a user equipment may be able to receive a plurality of MCCHs.

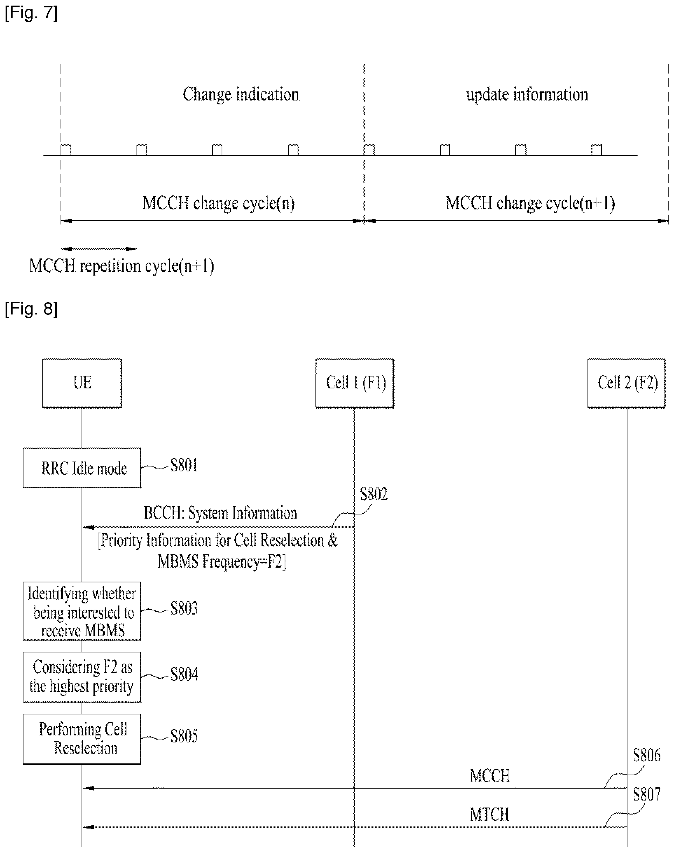

FIG. 7 shows a transmission scheme of MCCH information.

Referring to FIG. 7, if an MBMS related RRC message is changed in a specific
MCCH, PDCCH transmits M-RNTI (MBMS-radio network temporary identity) and an MCCH indicator indicating a specific MCCH. A user equipment, which supports MBMS, receives the M-RNTI and the MCCH indicator via the PDCCH, recognizes that the MBMS related RRC message has been changed, and is then able to receive the specific MCCH. The RRC message of the MCCH can be changed each change cycle and is repeatedly broadcasted each repetitive cycle.

Meanwhile, the MCCH transmits MBSFNAreaConfiguration message that indicates a ongoing MBMS session and a corresponding RB setting. And, the MCCH is able to transmit an MBMS counting request (MBMSCountingRequest) message for counting the number of user equipments in an RRC connected state, each of which receives or intends to receive at least one MBMS service.

A specific MBMS control information can be provided via BCCH. In particular, the specific MBMS control information can be contained in SystemlnformationBlockTypel 3 broadcasted via the BCCH.

Meanwhile, the user equipment in the RRC idle state camps on one cell by performing the above-described cell selection and/or cell reselection procedure and monitors a paging signal and system information in the camped on cell. At this time, the user equipment is interested in the MBMS, the user equipment may receive the MBMS even in the RRC idle state.

### < First embodiment

In such prior art, the user equipment in the idle state performs the cell selection and/ or cell reselection procedure according to signal quality of a cell irrespective of whether the MBMS is received. Accordingly, the user equipment may select a cell which does not provide the MBMS, and then the user equipment is unable to receive the MBMS.

According to the present invention, if the user equipment desires a specific service, i.e. a specific MBMS or if the user equipment is interested in a specific service, the user equipment receives a priority list of frequencies for cell selection or cell reselection from a network, identifies a frequency at which the specific service (specific MBMS) is provided, and places the highest priority on the frequency at which the specific service is provided from the priority list. On the other hand, the priority list can be discerned through system information received from the network. Information on the frequency at which the specific service is provided can also be discerned through the system information. If the user equipment does not desire to receive the specific service or is not interested in the specific service, the user equipment may be restored to a normal priority list.

The above-described method is effective when the user equipment is located in an area in which the specific service is provided. If the user equipment is not located in the specific service provision area, it is desirable that the user equipment perform the cell selection and cell reselection procedures based on the normal priority list.

In the first embodiment of the present invention, the network provides a frequency priority for cell reselection, that the user equipment is to use in an RRC idle state, through system information or an RRC connection release message, and the user equipment in the RRC idle state performs cell reselection according to the frequency priority.

FIG. 8 is a flowchart showing a cell reselection procedure according the first embodiment of the present invention.

Referring to FIG. 8, the user equipment in the RRC idle state selects a camped on cell by performing a cell selection or cell reselection procedure in step S 801. It is assumed in FIG. 8 that the user equipment selects a first cell of a frequency F1.

The user equipment acquires system information from the selected first cell in step S802. For an MBMS, the first cell broadcasts through the system information the fact that the MBMS is provided at a frequency F2. Accordingly, if the user equipment obtains the system information from the first cell, the user equipment is able to recognize that the MBMS is provided at the frequency F2. Further, the first cell may broadcast through the system information a frequency list showing frequencies at which the MBMS is provided.

Next, the user equipment determines that it is interested in receiving the MBMS in step 803. If the user equipment is interested in receiving the MBMS and if the user equipment is located in an area in which the MBMS is provided, the user equipment places the highest priority on the frequency F2 at which the MBMS is provided, for cell reselection, in step S804. In other words, the user equipment assigns a higher priority to the frequency F2 at which the MBMS is provided in a cell reselection priority list received from a network than to other frequencies. Accordingly, the frequency F2 has the highest priority as opposed to priority in the cell reselection priority list which has been received from the network, and priority of the other frequencies is maintained as in the priority list received from the network.

The user equipment performs a cell reselection procedure under the state that the frequency F2 has the highest priority in step S805. If cells operating at the frequency F2 are measured as having signal strength/quality higher than a specific threshold value, the user equipment performs cell reselection with respect to cells operating at the frequency F2. At this time, the user equipment reselects a cell having the best signal strength/quality among the cells operating at the frequency F2. In FIG. 8, it is assumed that a second cell operating at the frequency F2 is reselected.

The user equipment receives an MCCH from the second cell to acquire control information for receiving the MBMS in step S806. The user equipment configures an MTCH using the acquired control information and receives data of the MBMS through the MTCH in step S807.

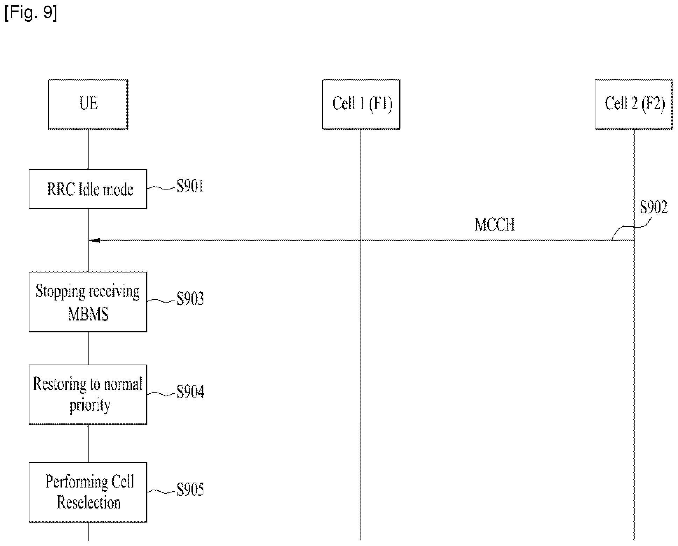

FIG. 9 is a flowchart showing another cell reselection procedure according the first embodiment of the present invention.

Referring to FIG. 9, the user equipment in an RRC idle state reselects the second cell to receive the MBMS in step S902. If the MBMS is stopped, the user equipment receives control information transmitted through an MCCH in step S902 and recognizes that the MBMS has been stopped in step S903.

If the MBMS that the user equipment desires to receive has been stopped, if the user equipment is not interested in receiving the MBMS, or if the user equipment is moved from an area in which the MBMS is provided, the user equipment restores priority of an MBMS provision frequency to a cell reselection priority which has been received from the network in step S904. In other words, the user equipment cancels priority of the frequency F2 which has assigned a higher priority than other frequencies and reapplies the cell reselection priority which has been received from the network through system information or an RRC connection release message. Consequently, the frequency F2 is reconfigured to the normal priority which has been received from the network.

Finally, the user equipment performs cell reselection according to the normal cell reselection priority which has been received from the network in step S905.

Accordingly, if the user equipment in an idle mode desires to receive the specific
MBMS, the user equipment performs a cell reselection procedure using the first priority information. On the contrary, if the user equipment is not interested in receiving the specific MBMS, or if the user equipment moves to a location corresponding to the second priority information from a location corresponding to the first priority information, the user equipment performs the cell reselection procedure using the second priority information.

As described above, the user equipment in the RRC idle state receives a priority list of frequencies from the network, identifies a frequency at which the specific service is provided through the system information, and places the highest priority on the frequency at which the specific service is provided from the priority list, thereby receiving the desired specific service in the RRC idle state.

### <Second embodiment

According to the prior art, one set of priorities of the frequencies are provided by a dedicated signalling or by system information. And, the UE should rely on the set of priorities until the set of priorities is replaced by the network or until the set of priorities is deleted due to PLMN selection, entering connected mode or timer expiry.

Depending on an environment around the UE, the set of priorities may need to be changed. For example, if the UE wishes to receive MBMS on frequency, UE will like to set the frequency carrying MBMS to the highest priority. However, since the UE is in idle mode, the network cannot change the set of priorities stored in the UE.

Therefore, in order to change the set of priorities stored in a terminal in idle mode, the second embodiment of the present invention provides a method comprising steps of receiving more than one set of priorities about carrier frequencies from the network, selecting one of the sets of priorities if detecting a specific location or a specific service, and applying the selected set of priorities for cell selection or cell reselection in the terminal.

The UE selects one of the sets of priorities based on the location that UE detects (for example, a cell, a tracking area, PLMN or a specific GPS position), whether or not the UE likes to receive a specific service (such as MBMS service), or based on whether or not the UE like to stay at a specific cell (such as CSG cell).

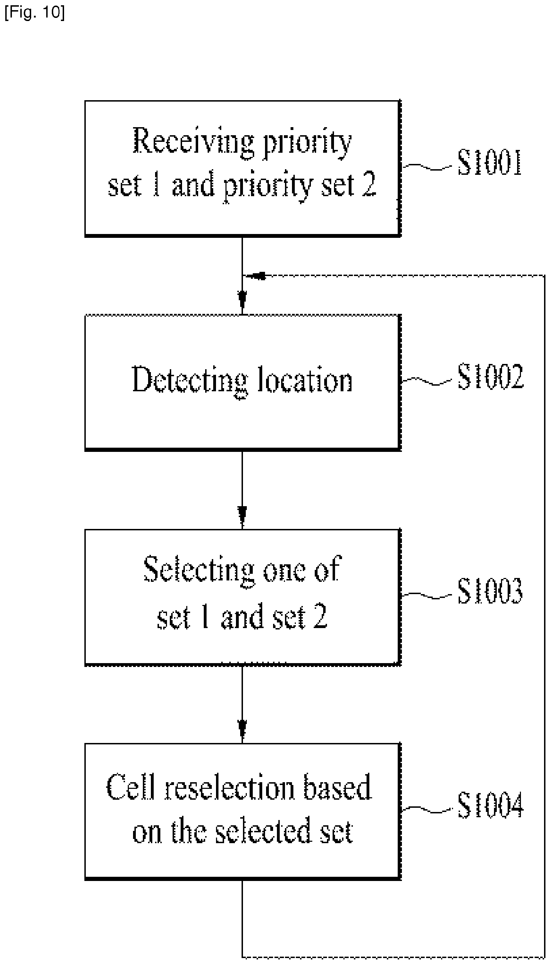

FIG. 10 is a flowchart showing a cell reselection procedure according the second embodiment of the present invention.

Referring to FIG. 10, in step 1001, the UE receives two sets of priorities about carrier frequencies or different RATs by receiving a dedicated signalling, RRC connection release message, or system information from a cell.

The cell may also inform the UE about location where a specific set of priorities should be applied, or about a service area where a specific set of priorities should be applied to receive a specific service. The location can be at least one of specific cell(s), cell(s) corresponding to specific CSG ID(s), specific Tracking Area(s), specific MBSFN area(s) for specific MBMS service(s), specific PLMN(s) and specific GPS position(s) and a range from the GPS position(s).

The UE stores the location and two sets of priorities during idle mode. One location corresponds to only one set of priorities. If UE has only one location that matches with one set of priorities (for example, set 2), another set of priorities (for example, set 1) is used when the UE is out of the location.

Next, the UE detects the location in step S1002, and then selects one of set 1 and set
2 in step S1003. For example, if the UE detects a certain location which matches with set 2, the UE performs cell reselection by using the set 2 of priorities in step S1004.

If the priorities correspond to LTE frequencies, the UE may select a cell on one of the LTE frequencies. If the priorities correspond to inter-RAT frequencies, the UE may select a cell on one of the inter-RAT frequencies after changing the current RAT. For example, the UE camping on a LTE cell may reselect a cell on a UMTS frequency and so UE changes RAT.

While moving, if the UE detects a certain location which matches with set 1 or if the UE leaves the location which matches with set 2, the UE performs cell reselection by using the set 1 of priorities. If the priorities correspond to LTE frequencies, the UE may select a cell on another LTE frequency. If the priorities correspond to inter-RAT frequencies, the UE may select a cell on another RAT frequency after changing the current RAT. For example, UE camping on a UMTS cell may reselect a cell on a LTE frequency and so UE changes RAT.

Further, the UE may receive one or more validity time by receiving a dedicated signalling, RRC connection release message, or system information from a cell. Different validity times correspond to different sets of priorities.

If the UE receive the validity time, UE starts a timer. If the timer reaches the validity time, the timer is expired and the set of priorities corresponding to the timer in the UE side. If the UE receives more than one validity times for different set of priorities, the UE runs more than one timer.

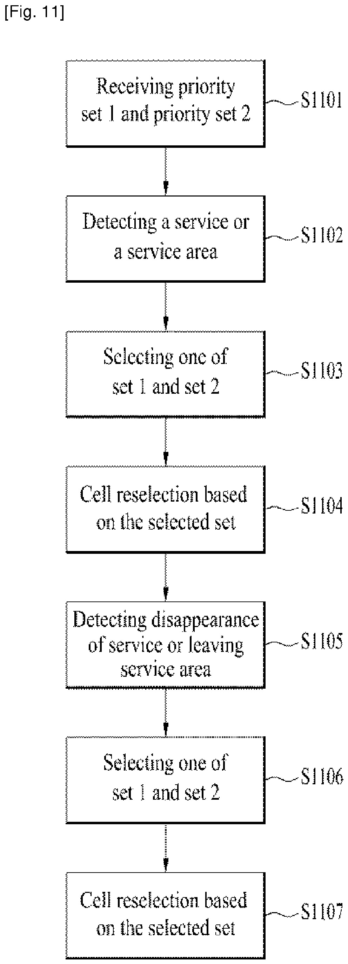

FIG. 11 is a flowchart showing another cell reselection procedure according the second embodiment of the present invention.

Referring to FIG. 11, in step 1101, the UE receives two sets of priorities about carrier frequencies or different RATs by receiving a dedicated signalling, RRC connection release message, or system information from a cell. The cell may also inform the UE about a service(s) which the UE should use a specific set of priorities to receive. The service(s) can be a MBMS service or an enterprise/private service.

The UE stores the service(s) and two sets of priorities during idle mode. One service or one set of services corresponds to only one set of priorities. If UE is receiving or interested in the service(s) that matches with one set of priorities (for example, set 2), another set of priorities (for example, set 1) is used when UE is not receiving or not interested in the service(s).

Next, the UE detects a service or a service area in step SI 102, and then selects one of set 1 and set 2 in step SI 103. For example, if the UE detects a notification or transmission of a certain service which matches with set 2, the UE performs cell reselection by using the set 2 of priorities in step 1104. If the priorities correspond to LTE frequencies, the UE may select a cell on one of the LTE frequencies. If the priorities correspond to inter-RAT frequencies, the UE may select a cell on one of the inter-RAT frequencies after changing the current RAT. For example, the UE camping on a LTE cell may reselect a cell on a UMTS frequency and so UE changes RAT.

Further, the UE detects a disappearance of the service or leaving the service area in step SI 105, and then selects one of set 1 and set 2 in step SI 106. For example, if the UE detects notification or transmission of another service which matches with set 1, or if the UE detects disappearance or no transmission of the service which matches with set 2, the UE performs cell reselection by using the set 1 of priorities in step SI 107. If the priorities correspond to LTE frequencies, the UE may select a cell on another LTE frequency. If the priorities correspond to inter-RAT frequencies, the UE may select a cell on another RAT frequency after changing the current RAT. That is, the UE camping on a UMTS cell may reselect a cell on a LTE frequency and so UE changes RAT.

For instance, if the UE is receiving a MBMS service or interesting in a MBMS service, when the UE detects notification or transmission of the MBMS service at a certain cell, UE should use set 2. Otherwise, if the UE is not interested in a MBMS service or if UE detects that the MBMS service is not available in the cell, UE should use set 1.

UE may receive one or more validity time by receiving a dedicated signalling, RRC connection release message, or system information from a cell. Different validity times correspond to different sets of priorities.

If UE receive the validity time, UE starts a timer. If the timer reaches the validity time, the timer is expired and the set of priorities corresponding to the timer in the UE side. If UE receives more than one validity times for different set of priorities, UE mns more than one timer.

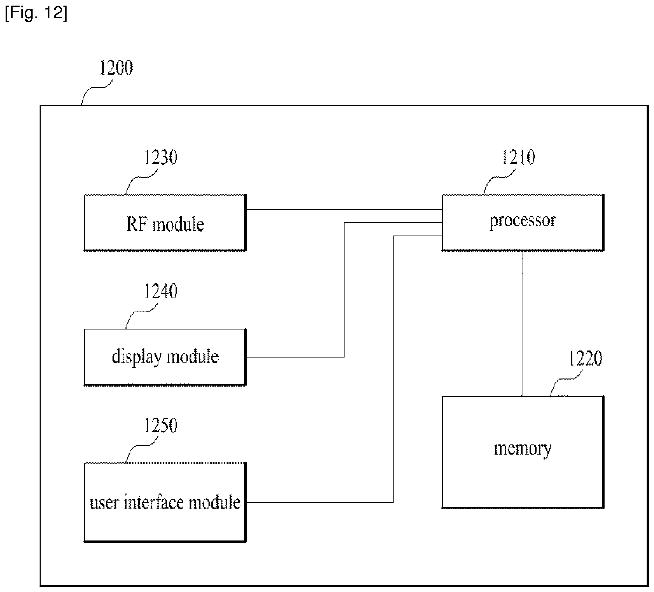

FIG. 12 is an exemplary block diagram of a communication apparatus according to one embodiment of the present invention.

Referring to FIG. 12, a communication device 1200 includes a processor 1210, a memory 1220, an RF module 1230, a display module 1240 and a user interface module 1250.

The communication device 1200 is illustrated for clarity and convenience of the description and some modules can be omitted. Moreover, the communication device 1200 is able to further include at least one necessary module. And, some modules of the communication device 120 can be further divided into sub-modules. The processor 1210 is configured to perform operations according to the embodiment of the present invention exemplarily described with reference to the accompanying drawings. In particular, the detailed operations of the processor 1210 can refer to the contents described with reference to FIGs. 1 to 11.

The memory 1220 is connected to the processor 1210 and stores an operating system, applications, program codes, data and the like. The RF module 1230 is connected to the processor 1210 and performs a function of converting a baseband signal to a radio signal or converting a radio signal to a baseband signal. For this, the RF module 1230 performs analog conversion, amplification, filtering and frequency uplink transform or inverse processes thereof. The display module 1240 is connected to the processor 1210 and displays various kinds of informations. The display module 1240 can include such a well-known element as LCD (Liquid Crystal Display), LED (Light Emitting Diode), OLED (Organic Light Emitting Diode) and the like, by which the present invention is non-limited. The user interface module 1250 is connected to the processor 1210 and can include a combination of well-known interfaces including a keypad, a touchscreen and the like.

The above described embodiments correspond to combination of elements and features of the present invention in prescribed forms. And, it is able to consider that the respective elements or features are selective unless they are explicitly mentioned. Each of the elements or features can be implemented in a form failing to be combined with other elements or features. Moreover, it is able to implement an embodiment of the present invention by combining elements and/or features together in part. A sequence of operations explained for each embodiment of the present invention can be modified. Some configurations or features of one embodiment can be included in another embodiment or can be substituted for corresponding configurations or features of another embodiment. It is apparent that an embodiment can be configured by combining claims, which are not explicitly cited in-between, together without departing from the scope of the invention as defined by the claims or that those claims can be included as new claims by revision after filing an application.

In the present disclosure, embodiments of the present invention are described centering on the data transmission/reception relations between a relay node and a base station. In this disclosure, a specific operation explained as performed by a base station can be performed by an upper node of the base station in some cases. In particular, in a network constructed with a plurality of network nodes including a base station, it is apparent that various operations performed for communication with a terminal can be performed by a base station or other network nodes except the base station. In this case, 'base station' can be replaced by such a terminology as a fixed station, a Node B, an eNode B (eNB), an access point and the like.

Embodiments of the present invention can be implemented using various means. For instance, embodiments of the present invention can be implemented using hardware, firmware, software and/or any combinations thereof. In case of the implementation by hardware, a method according to one embodiment of the present invention can be implemented by at least one selected from the group consisting of ASICs (application specific integrated circuits), DSPs (digital signal processors), DSPDs (digital signal processing devices), PLDs (programmable logic devices), FPGAs (field programmable gate arrays), processor, controller, microcontroller, microprocessor and the like.

In case of the implementation by firmware or software, a method according to each embodiment of the present invention can be implemented by modules, procedures, and/or functions for performing the above-explained functions or operations. Software code is stored in a memory unit and is then drivable by a processor. The memory unit is provided within or outside the processor to exchange data with the processor through the various means known in public.

### Industrial Applicability

As mentioned in the foregoing description, although a method of providing service to a user equipment in a wireless communication system and apparatus thereof is described mainly with reference to examples applied to 3GPP LTE system, the present invention is applicable to various kinds of wireless communication systems as well as the 3GPP LTE system.

## Claims

1. A method for prioritizing frequencies by a user equipment, UE, in a wireless communication system, the method comprising:
receiving from a network a priority list of a plurality of frequencies for cell selection or cell reselection, each frequency having a corresponding priority; and
considering (S804) a specific frequency to have the highest priority among the plurality of frequencies, wherein the specific frequency is for a MBMS, Multimedia Broadcast Multicast Service, service, and wherein the specific frequency is considered to have the highest priority if the UE is interested in receiving the MBMS service; and
changing a priority of the specific frequency and performing cell selection or cell reselection based on the received priority list, if the UE is not located in an area in which the MBMS service is provided.

2. The method of claim 1, wherein the method further comprises
selecting or reselecting a cell operating at the specific frequency, and
receiving the MBMS service by camping on the cell operating at the specific frequency.

3. The method of claim 1 or 2, wherein the step of considering the specific frequency to be the highest priority is related to reselection priorities handling,
wherein the reselection priorities handling is performed by the UE in an RRC, Radio Resource Control, idle mode (S801), and/or
wherein the reselection priorities handling is for a cell reselection procedure.

4. The method of claim 1, further comprising:
receiving the priority list from a network, wherein the priority list is received via system information or dedicated signalling.

5. The method of claim 4, wherein the dedicated signalling comprises a RRC, Radio Resource Control, connection release message.

6. A user equipment, UE, (1200) for a wireless communication system, comprising: a processor (1210) configured to cause the UE to:
receive from a network a priority list of a plurality of frequencies for cell selection or cell reselection, each frequency having a corresponding priority, and
consider (S804) a specific frequency to have the highest priority among the plurality of frequencies, wherein the specific frequency is for a MBMS, Multimedia Broadcast Multicast Service, service, and wherein the specific frequency is considered to have the highest priority if the UE is interested in receiving the MBMS service and
change a priority of the specific frequency and perform cell selection or cell reselection based on the received priority list, if the UE is not located in an area in which the MBMS service is provided.

7. The UE (1200) of claim 6, wherein the processor (1210) is further configured to cause the UE to:
select or reselect a cell operating at the specific frequency, and
receive the MBMS service by camping on the cell operating at the specific frequency.

8. The UE (1200) of claim 6 or 7, wherein the consideration of the specific frequency to be the highest priority is related to reselection priorities handling,
wherein the reselection priorities handling is performed by the UE in an RRC, Radio Resource Control, idle mode (S801).

9. The UE (1200) of claim 8, wherein the reselection priorities handling is for a cell reselection procedure.

10. The UE of claim 6, wherein the processor (1210) is further configured to cause the UE to receive the priority list from a network, wherein the priority list is received via system information or dedicated signalling.

11. The UE (1200) of claim 10, wherein the dedicated signalling comprises a RRC, Radio Resource Control, connection release message.

## Patentansprüche

1. Verfahren zum Priorisieren von Frequenzen durch ein Anwendergerät, UE, in einem drahtlosen Kommunikationssystem, wobei das Verfahren Folgendes umfasst:
Empfangen von einem Netz einer Prioritätsliste mehrerer Frequenzen für eine Zellauswahl oder eine Zellneuauswahl, wobei jede Frequenz eine entsprechende Priorität besitzt; und
Erachten (S804), dass eine spezifische Frequenz eine höchste Priorität unter den mehreren Frequenzen besitzt, wobei die spezifische Frequenz für einen MBMS, "Multimedia Broadcast Multicast"-Dienst, ist und wobei erachtet wird, dass die spezifische Frequenz die höchste Priorität besitzt, wenn das UE daran interessiert ist, den MBMS-Dienst zu empfangen; und
Ändern einer Priorität der spezifischen Frequenz und Ausführen einer Zellauswahl oder einer Zellneuauswahl anhand der empfangenen Prioritätsliste, wenn sich das UE nicht in einem Bereich befindet, in dem der MBMS-Dienst bereitgestellt wird.

2. Verfahren nach Anspruch 1, wobei das Verfahren ferner Folgendes umfasst:
Auswählen oder Neuauswählen einer Zelle, die bei der spezifischen Frequenz arbeitet, und
Empfangen des MBMS-Dienstes durch Lagern auf der Zelle, die bei der spezifischen Frequenz arbeitet.

3. Verfahren nach Anspruch 1 oder 2, wobei sich der Schritt des Erachtens, dass die spezifische Frequenz die höchste Priorität ist, auf die Handhabung von Neuauswahlprioritäten bezieht,
wobei die Handhabung der Neuauswahlprioritäten durch das UE in einer RCC-Ruhebetriebsart, Funkbetriebsmittelsteuerruhebetriebsart, (S801) ausgeführt wird und/oder
wobei die Handhabung der Neuauswahlprioritäten für eine Zellneuauswahlprozedur dient.

4. Verfahren nach Anspruch 1, das ferner Folgendes umfasst:
Empfangen der Prioritätsliste von einem Netz, wobei die Prioritätsliste über Systeminformationen oder eine dedizierte Signalisierung empfangen wird.

5. Verfahren nach Anspruch 4, wobei die dedizierte Signalisierung eine RRC-Verbindungsfreigabenachricht, Funkbetriebsmittelsteuerverbindungsfreigabenachricht, umfasst.

6. Anwendergerät, UE, (1200) für ein drahtloses Kommunikationssystem, das Folgendes umfasst:
einen Prozessor (1210), der konfiguriert ist, zu bewirken, dass das UE
von einem Netz eine Prioritätsliste mehrerer Frequenzen für eine Zellauswahl oder eine Zellneuauswahl empfängt, wobei jede Frequenz eine entsprechende Priorität besitzt, und
erachtet (S804), dass eine spezifische Frequenz die höchste Priorität unter den mehreren Frequenzen besitzt, wobei die spezifische Frequenz für einen MBMS, "Multimedia Broadcast Multicast"-Dienst, ist und wobei erachtet wird, dass die spezifische Frequenz die höchste Priorität besitzt, wenn das UE daran interessiert ist, den MBMS-Dienst zu empfangen, und
eine Priorität der spezifischen Frequenz zu ändern und eine Zellauswahl oder eine Zellneuauswahl anhand der empfangenen Prioritätsliste auszuführen, wenn sich das UE nicht in einem Bereich befindet, in dem der MBMS-Dienst bereitgestellt wird.

7. UE (1200) nach Anspruch 6, wobei der Prozessor (1201) ferner konfiguriert ist, zu bewirken, dass das UE:
eine Zelle auswählt oder neuauswählt, die bei der spezifischen Frequenz arbeitet, und
den MBMS-Dienst durch Lagern auf der Zelle, die bei der spezifischen Frequenz arbeitet, zu empfängt.

8. UE (1200) nach Anspruch 6 oder 7, wobei sich das Erachten, dass die spezifische Frequenz die höchste Priorität ist, auf eine Handhabung von Neuauswahlprioritäten bezieht,
wobei die Handhabung von Neuauswahlprioritäten durch das UE in einer RRC-Ruhebetriebsart, Funkbetriebsmittelsteuerruhebetriebsart, (S801) ausgeführt wird.

9. UE (1200) nach Anspruch 8, wobei die Handhabung von Neuauswahlprioritäten für eine Zellneuauswahlprozedur dient.

10. UE nach Anspruch 6, wobei der Prozessor (1210) ferner konfiguriert ist, zu bewirken, dass das UE die Prioritätsliste von einem Netz empfängt, wobei die Prioritätsliste über Systeminformationen oder eine dedizierte Signalisierung empfangen wird.

11. UE (1200) nach Anspruch 10, wobei die dedizierte Signalisierung eine RRC-Verbindungsfreigabenachricht, Funkbetriebsmittel-Steuerverbindungs-Freigabenachricht, umfasst.

## Revendications

1. Procédé de priorisation de fréquences par un équipement utilisateur, UE, dans un système de communication sans fil, le procédé comprenant les étapes suivantes :
recevoir d'un réseau une liste de priorités d'une pluralité de fréquences pour la sélection ou la resélection de cellules, chaque fréquence ayant une priorité correspondante ; et
considérer (S804) qu'une fréquence spécifique a la priorité la plus élevée parmi la pluralité de fréquences, où la fréquence spécifique est pour un service de diffusion et multidiffusion multimédia, MBMS, et où la fréquence spécifique est considérée comme ayant la priorité la plus élevée si l'UE est intéressé par la réception du service MBMS ; et
changer une priorité de la fréquence spécifique et procéder à une sélection ou une resélection de cellules sur la base de la liste de priorités reçue, si l'UE n'est pas situé dans une zone dans laquelle le service de MBMS est fourni.

2. Procédé selon la revendication 1, dans lequel le procédé comprend en outre les étapes suivantes :
sélectionner ou resélectionner une cellule fonctionnant à la fréquence spécifique, et
recevoir le service MBMS en attendant sur la cellule fonctionnant à la fréquence spécifique.

3. Procédé selon la revendication 1 ou la revendication 2, dans lequel l'étape comprenant de considérer la fréquence spécifique comme ayant la priorité la plus élevée est liée au traitement des priorités de resélection,
où le traitement des priorités de resélection est effectué par l'UE dans un mode de repos de contrôle des ressources radio, RRC, (S801), et/ou
où le traitement des priorités de resélection est destiné à une procédure de resélection de cellules.

4. Procédé selon la revendication 1, comprenant en outre les étapes suivantes :
recevoir la liste de priorités depuis un réseau, où la liste de priorités est reçue par l'intermédiaire d'informations système ou d'une signalisation dédiée.

5. Procédé selon la revendication 4, dans lequel la signalisation dédiée comprend un message de libération de connexion de contrôle des ressources radio, RRC.

6. Équipement utilisateur, UE, (1200) pour un système de communication sans fil, comprenant :
un processeur (1210) configuré pour amener l'UE à :
recevoir d'un réseau une liste de priorités d'une pluralité de fréquences pour la sélection ou la resélection de cellules, chaque fréquence ayant une priorité correspondante, et
considérer (S804) qu'une fréquence spécifique a la priorité la plus élevée parmi la pluralité de fréquences, où la fréquence spécifique est pour un service de diffusion et multidiffusion multimédia, MBMS, et où la fréquence spécifique est considérée comme ayant la priorité la plus élevée si l'UE est intéressé par la réception du service MBMS ; et
changer une priorité de la fréquence spécifique et procéder à une sélection ou une resélection de cellules sur la base de la liste de priorités reçue, si l'UE n'est pas situé dans une zone dans laquelle le service de MBMS est fourni.

7. UE (1200) selon la revendication 6, dans lequel le processeur (1210) est en outre configuré pour amener l'UE à :
sélectionner ou resélectionner une cellule fonctionnant à la fréquence spécifique, et
recevoir le service MBMS en attendant sur la cellule fonctionnant à la fréquence spécifique.

8. UE (1200) selon la revendication 6 ou la revendication 7, dans lequel la considération de la fréquence spécifique comme ayant la priorité la plus élevée est liée au traitement des priorités de resélection,
où le traitement des priorités de resélection est effectué par l'UE dans un mode de repos de contrôle des ressources radio, RRC, (S801).

9. UE (1200) selon la revendication 8, dans lequel le traitement des priorités de resélection est destiné à une procédure de resélection de cellules.

10. UE selon la revendication 6, dans lequel le processeur (1210) est en outre configuré pour que l'UE reçoive la liste de priorités d'un réseau, la liste de priorités étant reçue par l'intermédiaire d'informations système ou d'une signalisation dédiée.

11. UE (1200) selon la revendication 10, dans lequel la signalisation dédiée comprend un message de libération de connexion de contrôle des ressources radio, RRC.
